Europäisches Patentamt

**European Patent Office**

Office européen des brevets

(19)

(11) Numéro de publication: **0 032 333**
**B1**

(12) **FASCICULE DE BREVET EUROPEEN**

(45) Date de publication du fascicule du brevet:
30.05.84

(51) Int. Cl.³: **G 01 M 15/00,** F 02 P 5/04

(21) Numéro de dépôt: 80401793.7

(22) Date de dépôt: 12.12.80

(54) Dispositif de détection de défauts de combustion dans un moteur à explosions.

(30) Priorité: 07.01.80 FR 8000191

(43) Date de publication de la demande:
22.07.81 Bulletin 81/29

(45) Mention de la délivrance du brevet:
30.05.84 Bulletin 84/22

(84) Etats contractants désignés:
DE GB IT

(56) Documents cités:
DE - A - 2 605 335
DE - A - 2 625 971
DE - A - 2 916 591
DE - A - 2 925 770
US - A - 4 002 155

(73) Titulaire: **AUTOMOBILES PEUGEOT, 75, avenue de la
Grande Armée, F-75116 Paris (FR)**
Titulaire: **AUTOMOBILES CITROEN, 117-167 Quai André
Citroen, F-75747 Paris Cedex 15 (FR)**

(72) Inventeur: **Roger, Raymond, 22, rue Saint-Louis,
F-78000 Versailles (FR)**

(74) Mandataire: **Moncheny, Michel et al, c/o Cabinet
Lavoix 2 Place d'Estienne d'Orves, F-75441 Paris
Cedex 09 (FR)**

## Description

La présente invention se rapporte à la détection de défauts de combustion dans un moteur à explosions et elle vise, plus particulièrement, le défaut connu sous l'appellation de «cliquetis».

La détection du cliquetis dans un moteur à un ou plusieurs cylindres se fait généralement à partir d'un capteur du type accéléromètre ou d'un capteur de pression, placé de façon appropriée sur la culasse du moteur. Le capteur transmet un certain nombre d'informations à un système chargé de l'exploitation du signal. Ces informations représentent principalement le «bruit» dû au fonctionnement du moteur, bruit duquel il faut extraire l'information éventuelle de l'existence du cliquetis.

Le problème est complexe, car le niveau du «bruit» varie d'un moteur à l'autre, d'un cylindre à l'autre pour un même moteur, ainsi qu'en fonction de la charge et du régime pour un même cylindre. La comparaison du signal délivré par le capteur avec un seuil fixe ne permet donc pas de détecter, de façon certaine, l'apparition du cliquetis.

On connaît également un dispositif de détection analogique selon le document DE-A-2 925 770 comprenant un capteur placé sur la culasse du moteur et un système d'exploitation des signaux fournis par ce capteur, comportant des moyens d'emmagasinage temporaire, au cours de chaque cycle, des données recueillies et relatives à chaque cylindre, ainsi que des moyens de comparaison de ces données à celles qui sont recueillies au cours du cycle suivant. Cependant ce système étant entièrement analogique est peu fiable et se prête mal à une application dans le domaine de l'automobile, où de tels dispositifs doivent fonctionner dans un environnement relativement difficile.

L'invention a donc pour but de fournir un dispositif simple et fiable, capable de délivrer une information sûre dès l'apparition du cliquetis.

Elle a pour objet un dispositif de détection de défauts de combustion dans un moteur à explosions, comprenant un capteur placé sur la culasse du moteur et un système d'exploitation des signaux dudit capteur, comportant des moyens d'emmagasinage temporaire au cours de chaque cycle, des données relatives à chaque cylindre du moteur et des moyens de comparaison des données relatives à chaque cylindre emmagasinées successivement au cours d'un cycle aux données correspondantes obtenues au cours du cycle suivant, caractérisé en ce que le système d'exploitation comprend des moyens de conversion des données analogiques fournies par le capteur, en données numériques et en ce que lesdits moyens d'emmagasinage temporaire sont constitués par autant de registres à décalage montés en série que le moteur comporte de cylindres lesdits registres étant reliés à un circuit d'aiguillage commandé par le signal de sortie desdits moyens de comparaison et destiné à connecter le premier registre à décalage, soit avec la sortie du convertisseur, soit avec la sortie du dernier registre à décalage en cas de défaut de combustion, cette dernière sortie étant en outre connectée à des moyens de sommation avec une valeur de seuil ($\Delta$), reliés auxdits moyens de comparaison.

Suivant d'autre caractéristiques:

— lesdits moyens de conversion analogique-numérique et lesdits moyens d'emmagasinage temporaire sont commandés par un décodeur qui délivre un signal en forme de créneau dont la durée correspond, comme connu en soi, à un intervalle angulaire de rotation du volant du moteur au cours duquel le défaut est susceptible de se produire;

— un codeur d'élaboration de ladite valeur de seuil ($\Delta$) est connecté auxdits moyens de sommation.

Un exemple de réalisation de l'invention fait l'objet de la description qui suit, faite en référence aux dessins joints dans lesquels:

— la Fig 1 est un schéma du dispositif selon l'invention;

— la Fig. 2 est un schéma du dispositif associé à un dispositif de déclenchement de l'allumage conforme à la demande de brevet français n° 7 817 157, au nom des Demanderesses.

Le dispositif décrit est supposé utilisé pour la détection du cliquetis sur un moteur à explosions M à quatre cylindres 1, 2, 3, 4. Ce dispositif est constitué par une partie analogique et une partie numérique.

La partie analogique comprend un capteur de cliquetis 5, par exemple un accéléromètre, fixé sur le moteur M, un amplificateur de charge 6, un filtre passe-bande 7, destiné à éliminer les fréquences indésirables, et un circuit 8 qui élabore une tension de crête maximale au cours de chaque période de mesure correspondant à un créneau obtenu par un décodeur 9. Ce décodeur peut être déclenché par exemple à partir d'un système d'allumage électronique 10. Le créneau permet de faire la mesure, pour chaque cylindre, dans un intervalle angulaire au cours duquel le cliquetis est susceptible de se produire.

La partie numérique comprend un convertisseur analogique/numérique 11, un circuit d'aiguillage 12, un ensemble de quatre registres à décalage 13, 14, 15, 16 montés en série, un codeur 17, un sommateur 18 et un comparateur 19 à deux entrées A, B et une sortie C.

Le fonctionnement du dispositif décrit est le suivant.

La partie analogique du circuit élabore une tension fonction de la valeur de crête maximale donnée par le capteur de cliquetis 5, pendant la durée du créneau.

Le convertisseur analogique/numérique transforme cette tension en une valeur numérique qui est envoyée, d'une part sur l'aiguillage 12 et d'autre part sur l'entrée A du comparateur 19.

Dans le cas représenté, d'un moteur à quatre cylindres, lorsque le capteur 5 reçoit l'information relative au cylindre 1, les registres à décalage 13, 14, 15, 16 contiennent les valeurs de crête maximales correspondant respectivement aux cylindres 2, 4, 3, 1. Ces valeurs sont celles qui ont été relevées, pour chaque cylindre, au cycle précédent.

A la sortie du registre 16, on a la valeur de crête maximale précédente du cylindre 1. A cette valeur on ajoute, dans le sommateur 18, une valeur de seuil $\Delta$ fournie par le codeur 17 et qui lorsqu'elle est atteinte indique la présence de cliquetis. Cette somme est envoyée sur l'entrée B du comparateur 19 et est comparée à la valeur issue directement du convertisseur 11 et introduite par l'entrée A.

Si A > B, il y a cliquetis. La sortie C du comparateur est au niveau «1» et est utilisée pour diminuer l'avance à l'allumage, de manière à éliminer le cliquetis. Dans ce cas, on reboucle la sortie du registre 16 sur le registre 13, par l'aiguillage 12, avant de faire le décalage.

Si A < B, il n'y a pas de cliquetis. La sortie C du comparateur est au niveau «0», On applique la sortie du convertisseur 11 à l'entrée du registre 13, par l'aiguillage 12, avant de faire le décalage.

Le décalage des registres 13, 14, 15, 16 est déclenché par la fin du créneau obtenu par le décodeur 9.

Le dispositif décrit, d'une grande simplicité, présente les avantages suivants:

On utilise un seuil de comparaison variable pour extraire l'information «présence de cliquetis» du signal de bruit.

Ce seuil est élaboré par mesure, à chaque cycle moteur, du niveau de bruit durant une course angulaire d'observation du phénomène, ce niveau de bruit étant mis en mémoire en vue d'une comparaison avec celui du cycle suivant. Ceci rend le système indépendant des dispersions du niveau de bruit d'un moteur à l'autre et de sa variation en fonction de la charge, du régime et de l'évolution du moteur dans le temps.

La comparaison est faite, pour chaque cylindre, avec la valeur précédente obtenue sur le même cylindre. On s'affranchit ainsi des différences entre les cylindres d'un même moteur.

En cas de détection de cliquetis, le niveau de bruit précédemment mémorisé est conservé comme référence jusqu'à disparition de l'anomalie.

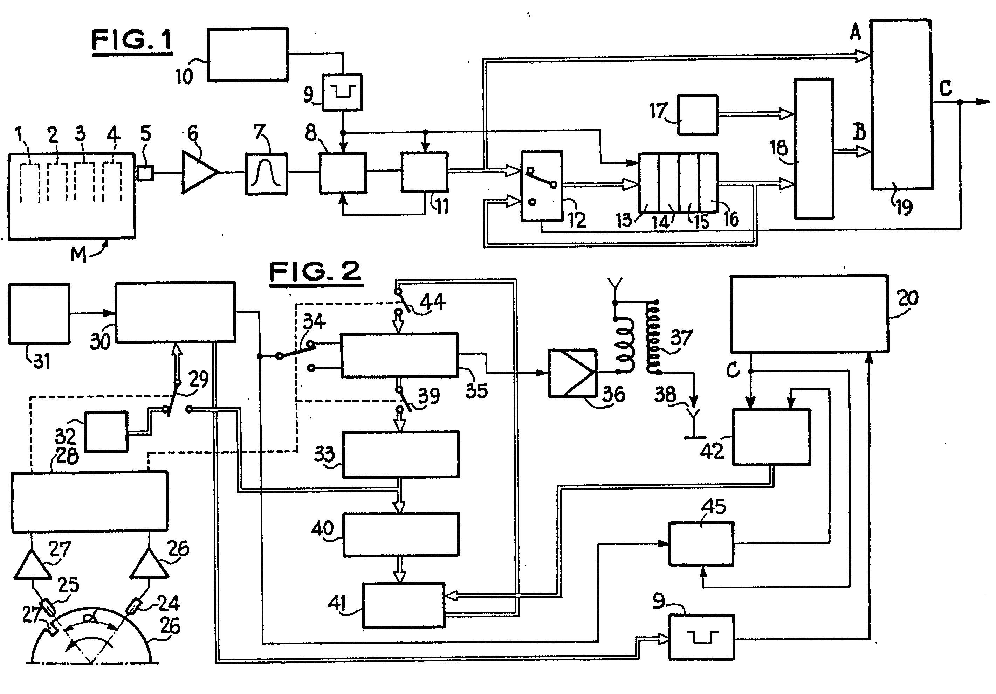

En se référant à la Fig. 2, le circuit précédent, repéré par la référence générale 20, est associé au dispositif de déclenchement de l'allumage représenté à la Fig. 2 de la demande de brevet français n° 7 817 157.

Ce dispositif comporte deux capteurs 24 et 25 placés au voisinage d'un disque 26 muni d'une encoche 27. Le capteur 25 et le repère 27 sont positionnés pour que le passage du repère devant le capteur se fasse pour une position angulaire du vilebrequin correspondant à l'avance minimale à l'allumage. Le capteur 24 est positionné en avance de α degrés sur le capteur 25, la valeur de l'angle α étant telle que α est supérieur à l'amplitude maximale désirée d'avance par rapport à l'avance initiale. Les sorties des capteurs 24 et 25 sont connectées par l'intermédiaire de circuits de mise en forme 26 et 27, aux entrées d'un circuit basculeur 28, dont une première sortie commande un commutateur 29. Ce dernier est destiné à connecter un diviseur programmable décompteur 30 recevant des impulsions d'une horloge 31, soit à un circuit 32 de mémorisation de l'angle β égal à la différence entre 360° et l'angle α séparant les deux capteurs 24 et 25, soit à un circuit de verrouillage 33. L'autre sortie du basculeur 28 commande un second commutateur 34 destiné à connecter le diviseur programmable décompteur 30 à une première ou à une seconde entrée d'un compteur-décompteur prépositionnable 35 dont la sortie est connectée à un étage de puissance 36 d'alimentation de la bobine d'allumage 37 des bougies telles que 38 du moteur M de la Fig. 1.

Le compteur-décompteur 35 comporte une sortie connectée au circuit de verrouillage 33 par l'intermédiaire d'un contact 39 couplé au commutateur 34. La sortie du circuit de verrouillage 33 est connectée à une mémoire 40 et au diviseur programmable décompteur 30 par l'intermédiaire du commutateur 29. La sortie de la mémoire 40 est elle-même connectée à un additionneur binaire 41 dont une autre entrée est connectée au circuit 20, par l'intermédiaire d'un circuit 42 de corrections additives. La sortie de l'additionneur binaire 41 est connectée à une entrée de prépositionnement du compteur-décompteur 35, par l'intermédiaire d'un autre contact 44 couplé au commutateur 34.

Les commutateurs 29, 34 et les contacts 39, 44 peuvent être commandés indifféremment par l'une ou l'autre des sorties du basculeur 28.

Dans l'ensemble qui vient d'être décrit, le décodeur 9 (Fig. 1) donnant le créneau au cours duquel est réalisée la mesure, reçoit une information représentative de l'état du diviseur programmable décompteur 30.

La sortie du circuit 20 qui est la sortie C du comparateur 19 est reliée au circuit 42 de corrections additives, constitué par un compteur-décompteur. Ce dernier est également relié à la sortie du diviseur programmable décompteur 30, à travers un diviseur 45 dont une entrée est reliée à la sortie C du comparateur 19.

Lorsque la sortie C est au niveau «1» annonçant la présence de cliquetis, le compteur-décompteur 42 agit dans le sens du comptage, ce qui provoque une diminution de l'avance. Cette diminution croit à chaque cycle, tant que le cliquetis subsiste, jusqu'à un maximum prédéterminé.

Lorsque la sortie C revient au niveau «0», annonçant la disparition du cliquetis, le compteur-décompteur 42 agit dans le sens du décomptage ce qui provoque le retour progressif à l'avance initiale. Ce retour à l'avance initiale se fait plus lentement que la diminution de l'avance sous l'effet du cliquetis, par action sur le diviseur 45 à partir de la sortie C du comparateur 19.

**Revendications**

1. Dispositif de détection de défauts de combustion dans un moteur à explosions, comprenant un capteur (5) placé sur la culasse du moteur et un système d'exploitation des signaux dudit capteur, comportant des moyens (13 à 16) d'emmagasinage temporaire au cours de chaque cycle, des données relatives à chaque cylindre (1 à 4) du moteur et des moyens (19) de comparaison des données relatives à chaque cylindre (1 à 4) emmagasinées successivement au cours d'un cycle aux données correspondantes obtenues au cours du cycle suivant, caractérisé en ce que le système d'exploitation comprend des moyens (11) de conversion des données analogiques fournies par le capteur (5), en données numériques et en ce que lesdits moyens d'emmagasinage temporaire sont constitués par autant de registres à décalage (13, 14, 15, 16) montés en série que le moteur (M) comporte de cylindres (1, 2, 3, 4), lesdits registres étant reliés à un circuit d'aiguillage (12) commandé par le signal de sortie desdits moyens de comparaison (19) et destiné à connecter le premier registre à décalage (13), soit avec la sortie du convertisseur (11), soit avec la sortie du dernier registre à décalage (16) en cas de défauts de combustion, cette dernière sortie étant en outre connectée à des moyens (18) de sommation avec une valeur de seuil (Δ), reliés auxdits moyens de comparaison (19).

2. Dispositif suivant la revendication 1, caractérisé en ce que lesdits moyens (11) de conversion analogique-numérique et lesdits moyens d'emmagasinage temporaire (13 à 16) sont commandés par un décodeur (9) qui délivre un signal en forme de créneau dont la durée correspond, comme connu en soi, à un intervalle angulaire de rotation du volant du moteur (M) au cours duquel le défaut est susceptible de se produire.

3. Dispositif suivant la revendication 1, caractérisé en ce qu'un codeur (17) d'élaboration de ladite valeur de seuil (Δ) est connecté auxdits moyens de sommation (18).

4. Dispositif de déclenchement de l'allumage d'un moteur à combustion interne, caractérisé en ce qu'il est équipé d'un dispositif de détection de défauts de combustion suivant l'une quelconque des revendications 1 à 3, destiné à modifier l'avance à l'allumage si des défauts de combustion sont détectés.

**Patentansprüche**

1. Vorrichtung zur Erfassung von Verbrennungsstörungen in einem Verbrennungsmotor mit einem Messfühler (5), der auf dem Zylinderkopf des Motors vorgesehen ist, und mit einer Verarbeitungseinrichtung für die Signale des Messfühlers, die Zwischenspeichereinrichtungen für die jeden Zylinder (1) bis (4) des Motors betreffenden Daten während jedes Zyklus und Vergleichseinrichtungen (19) zum Vergleichen der für den jeweiligen Zylinder (1) bis (4) gespeicherten Daten in sukzessiver Folge während eines Zyklus mit entsprechenden Daten, die während des folgenden Zyklus erhalten werden, aufweist, dadurch gekennzeichnet, dass die Verarbeitungseinrichtung eine Einrichtung (11) zum Umwandeln der vom Messfühler (5) gelieferten analogen Daten in numerische Daten aufweist, dass die Zwischenspeichereinrichtungen von ebenso vielen und in Serie geschalteten Schieberegistern (13, 14, 15, 16) gebildet werden, wie der Motor (M) Zylinder (1, 2, 3, 4) hat, dass die Register mit einer Verteilerschaltung (12) verbunden sind, die durch das Ausgangssignal der Vergleichseinrichtungen (19) gesteuert wird und die dazu bestimmt ist, das erste Schieberegister (13) entweder mit dem Ausgang des Wandlers (11) oder mit dem Ausgang des letzten Schieberegisters (16) im Falle einer Verbrennungsstörung zu verbinden, und dass der letzte Ausgang ferner mit einer Anforderungseinrichtung (18) mit einem Schwellenwert (Δ) verbunden ist, der mit der Vergleichseinrichtung (19) verbunden ist.

2. Vorrichtung nach Anspruch 1, dadurch gekennzeichnet, dass die analog/numerische Wandlereinrichtung (11) und die Zwischenspeichereinrichtungen (13 bis 16) von einem Decoder (9) gesteuert werden, der ein Signal in Form einer Zinne liefert, dessen Dauer wie an sich bekannt einem Winkelintervall der Drehung des Schwungrades des Motors (M) entspricht, während der die Störung auftreten kann.

3. Vorrichtung nach Anspruch 1, dadurch gekennzeichnet, dass ein Codierer (17) zur Erzeugung des Schwellenwertes (Δ) mit der Anforderungseinrichtung (18) verbunden ist.

4. Vorrichtung zur Zündungsverstellung einer Brennkraftmaschine, dadurch gekennzeichnet, dass sie mit einer Vorrichtung zur Ermittlung von Verbrennungsstörungen nach einem der Ansprüche 1 bis 3 ausgestattet ist, die dazu bestimmt ist, den Zündzeitpunkt im Sinne einer Frühzündung zu verstellen, wenn Verbrennungsstörungen ermittelt werden.

**Claims**

1. Device for detecting combustion defects in an internal combustion engine, comprising a detector (5) placed on the cylinder head of the engine and a system for utilising the signals of said detector, having means (13-16) for temporarily storing in the course of each cycle, data relating to each cylinder (1 to 4) of the engine, and means (19) for comparing the data relating to each cylinder (1 to 4) stored in succession in the course of a cycle with corresponding data obtained in the course of the following cycle, characterized in that the utilisation system comprises means (11) for converting analog data delivered by the detector (5) into digital data and in that said temporary storing means are constituted of as many shift registers (13, 14, 15, 16) connected in series as the engine (M) has cylinders (1, 2, 3, 4), said registers being connected to a switching circuit (12) controlled by the output signal of said comparing means (19) and adapted to connect the first shift register (13) with the output of the converter (11) or with the output of the last shift register (16) if combustion defects occur, the last-mentioned output being furthermore connected to means (18) for adding a threshold value (Δ), connected to said comparing means (19).

2. Device according to claim 1, characterized in that said analog-to-digital converting means (11) and said temporary storing means (13-16) are controlled by a decoder (9) which delivers a rectangular signal whose duration corresponds, in the known manner, to an angular interval of rotation of the flywheel of the engine (M) wherein the defect is liable to occur.

3. A device according to claim 1, characterized in that an encoder (17) for producing said threshold value (Δ) is connected to said adding means (18).

4. Device for initiating the ignition of an internal combustion engine, characterized in that it is provided with a device for detecting combustion defects according to any one of the claims 1 to 3 adapted to modify the ignition timing if combustion defects are detected.

FIG.1

FIG.2